Europäisches Patentamt

European Patent Office

Office européen des brevets

(11) Publication number : **0 622 793 A2**

## (12) EUROPEAN PATENT APPLICATION

(21) Application number : **94302999.1**

(22) Date of filing : **26.04.94**

(51) Int. Cl.$^5$ : **G11B 11/10**

(30) Priority : **30.04.93 JP 104590/93**

(43) Date of publication of application :
**02.11.94 Bulletin 94/44**

(84) Designated Contracting States :
**DE FR GB**

(71) Applicant : **PIONEER ELECTRONIC
CORPORATION
No. 4-1, Meguro 1-chome
Meguro-ku Tokyo-to (JP)**

(72) Inventor : **Onagi, Nobuaki, Pioneer Electronic
Corporation
Sougou Kenkyusho,
No. 6-1-1 Fujimi
Tsurugashima-shi, Saitama-ken (JP)**

(74) Representative : **Brunner, Michael John et al
GILL JENNINGS & EVERY
Broadgate House
7 Eldon Street
London EC2M 7LH (GB)**

(54) **Apparatus for reproducing optical recording medium and method of reproducing the same.**

(57) An apparatus (11) for reproducing an optical recording medium (12), which has a substrate and a magneto-optic layer formed on the substrate and on which information is recorded as a phase pit, is provided with : a light source (14) for irradiating a circular polarized light as a reading light onto the optical recording medium from a side of the substrate to form a light spot on the optical recording medium ; a light receiving device (14) for receiving the reading light reflected by the optical recording medium to output a received light signal ; a separating device (17) for separating one of a first received light signal corresponding to a light reflected from a high temperature domain, which temperature is not lower than the curie point, in the light spot, and a second received light signal corresponding to a light reflected from a low temperature domain, which temperature is lower than the curie point, in the light spot, from the received light signal on the basis of a signal level of the received light signal ; and a reproducing device (17, 19) for reproducing a record information on the basis of the separated one of the first and second received light signals.

FIG. 5

EP 0 622 793 A2

The present invention is related with an apparatus for reproducing an optical recording medium, such as a CD (Compact Disc) and a LD (Laser Disc), on which signals of various information such as audio and image information are recorded, and also a method of reproducing the same. More particularly, the present invention is related with an apparatus for and a method of reproducing an optical recording medium, on which information is recorded by a high density.

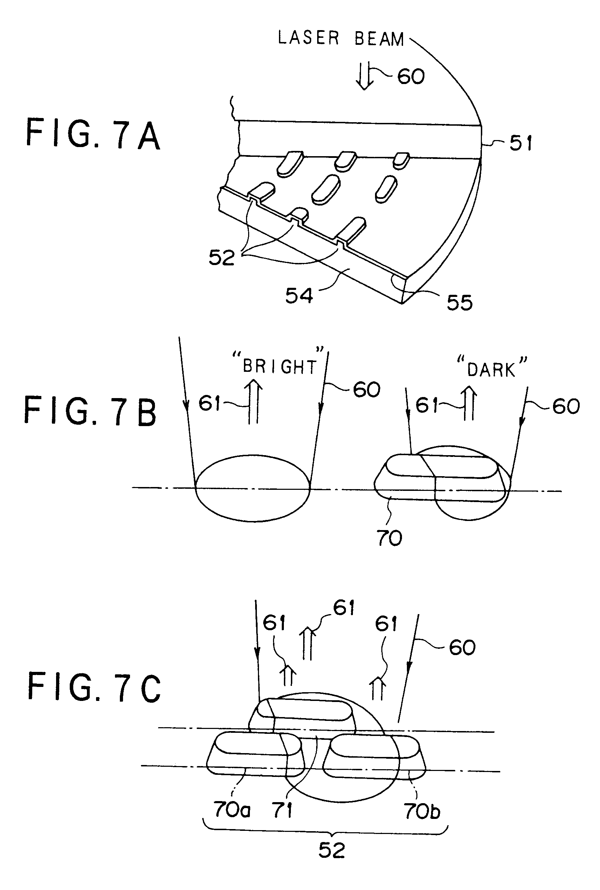

A recording disc has a center hole at its central portion. Information is recorded as one track connected with the outer circumference of this center hole in a spiral shape. This kind of recording disc is constituted as shown in FIG. 7A. Namely, a phase pit portion 52 in a concavo-convex form corresponding to information, is formed on a transparent disc substrate 51, made from acrylic resin (Polymethyl methacrylate; PMMA) etc.. An aluminum film 55 having a high reflection coefficient, is vapor-deposited on the disc substrate 51 on which the phase pit portion 52 is formed. And, a protection layer 54 made from plastic etc., is formed on the aluminum film 55.

When reproducing information from the recording disc having the above mentioned constitution, a laser beam 60 as a reading light is irradiated onto the phase pit portion 52 of the track, which becomes an object for reproduction, from the side of the transparent disc substrate 51. As shown in FIG. 7B, a reflected light 61, which is reflected by a mirror finished surface portion between the pits where no phase pit 70 exists, is detected as "bright". On the other hand, the reflected light 61, which is reflected by the phase pit portion 52, is detected as "dark". In this manner, the information corresponding to each record pit i.e. phase pit 70 of the information pit portion 52, is reproduced by the "bright" and "dark" reflected lights.

Apart from that, since the diameter of the beam spot is determined in dependence on the wavelength of the light beam, there is a certain limit to reduce the diameter of the light spot in order to increase the recording density.

Therefore, in case of recording the information by use of a narrow track pitch between adjacent record tracks (at the time of high density recording), if the information is recorded with a narrow track pitch exceeding the limit of the reduction of the diameter of the light spot, the light beam would be projected onto two or more tracks. As a result, there arises a problem that a correct information cannot be reproduced.

More concretely, as shown in FIG. 7C, a plurality of pieces of the information of "dark" (or "bright") of the reflected light 61 are simultaneously detected from each information pit 70a, 70b, 71 on two or more tracks. As a result, there arises a problem that the information reproduction cannot be precisely performed.

It is therefore an object of the present invention to provide an apparatus for and a method of reproducing an optical recording medium, which can reproduce information precisely from an optical recording medium, on which the information having a high spatial frequency with respect to the size of a light spot of a reading light, is recorded as a phase pit.

The above object of the present invention can be achieved by an apparatus for reproducing an optical recording medium, which has a substrate and a magneto-optic layer or film formed on the substrate and on which information is recorded as a phase pit. The apparatus is provided with: a light source for irradiating a circular polarized light as a reading light onto the optical recording medium from a side of the substrate to form a light spot on the optical recording medium; a light receiving device for receiving the reading light reflected by the optical recording medium to output a received light signal; a separating device for separating one of a first received light signal corresponding to a light reflected from a high temperature domain, which temperature is not lower than the curie point, in the light spot, and a second received light signal corresponding to a light reflected from a low temperature domain, which temperature is lower than the curie point, in the light spot, from the received light signal on the basis of a signal level of the received light signal; and a reproducing device for reproducing a record information on the basis of the separated one of the first and second received light signals.

According to the present invention, the light source irradiates a circular polarized light as a reading light onto the optical recording medium from the side of the substrate of the optical recording medium.

The light receiving device receives the reading light, which is reflected by the optical recording medium, and outputs the received light signal to the separating device.

Then, the separating device separates one of the first received light signal and the second received light signal from the inputted received light signal on the basis of the signal level thereof. Here, the first received light signal corresponds to the reflected light from the high temperature domain, which temperature is not lower than the curie point, in the light spot formed on the optical recording medium by the reading light. The second received light signal corresponds to the reflected light from the low temperature domain, which temperature is lower than the curie point, in the light spot formed on the optical recording medium by the reading light. And, the separating device outputs the separated signal to the reproducing device. The reproducing device reproduces the record information on the basis of the separated one of the first received light signal and the second received light signal.

Therefore, the reproducing device can reproduce only one of the record information in the high temperature domain, and the record information in the low temperature domain. Therefore, the information, which has a high spatial frequency with respect to the size of the light spot of the reading light, i.e. which has a spatial frequency higher than a spatial frequency of the light spot of the reading light, can be reproduced by the apparatus of the present invention.

The above object of the present invention can be also achieved by a method of reproducing an optical recording medium, including the steps of: preparing an optical recording medium, which has a substrate and a magneto-optic layer formed on the substrate and on which information is recorded as a phase pit; irradiating a circular polarized light as a reading light onto the optical recording medium from a side of the substrate to form a light spot on the optical recording medium; receiving the reading light reflected by the optical recording medium to output a received light signal; separating one of a first received light signal corresponding to a light reflected from a high temperature domain, which temperature is not lower than the curie point, in the light spot, and a second received light signal corresponding to a light reflected from a low temperature domain, which temperature is lower than the curie point, in the light spot, from the received light signal on the basis of a signal level of the received light signal; and reproducing a record information on the basis of the separated one of the first and second received light signals.

Accordingly, only one of the record information in the high temperature domain, and the record information in the low temperature domain, can be reproduced. Therefore, the information, which has a high spatial frequency with respect to the size of the light spot of the reading light, can be reproduced by the method of the present invention.

The nature, utility, and further features of this invention will be more clearly apparent from the following detailed description with respect to preferred embodiments of the invention when read in conjunction with the accompanying drawings briefly described below.

In the drawings:

FIG. 1 is one diagram for explaining the principle of an embodiment according to the present invention;

FIG. 2 is another diagram for explaining the principle of the embodiment;

FIG. 3 is a partially cross-sectional and whole perspective view of an optical disc used for the embodiment;

FIG. 4, which consist of FIG. 4A and FIG. 4B, are cross-sectional views of the optical disc of FIG. 3;

FIG. 5 is a block diagram, which indicates an outline constitution of an optical disc reproducing apparatus as one embodiment of the present invention;

FIG. 6 is a diagram for explaining a separation operation of a RF signal in the embodiment of FIG.

5; and

FIG. 7, which consist of FIG. 7A, FIG. 7B and FIG. 7C, are diagrams for explaining the constitution and reproduction of an optical disc according to the related art.

Nextly, preferred embodiments of the present invention will be explained with reference to drawings.

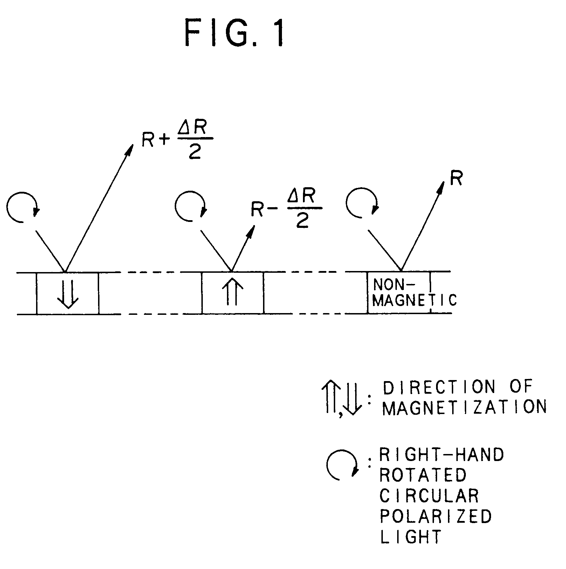

Firstly, with reference to FIG. 1, the principle of the present embodiment is explained.

In the present embodiment, the reproduction is performed by use of the so-called circular dichroism effect, which is such an effect that the intensity and the phase of a light are varied depending on the direction of magnetization of a magneto-optic layer or film when a circular polarized light is incident to the magneto-optic layer.

For example, a right-hand rotated circular polarized light, which light polarization plane is rotated in the right hand direction, is used as the circular polarized light to be incident to the recording disc. The reflection coefficient of a non-magnetized domain of the magneto-optic layer is expressed by R. The amount of change in the reflection coefficient due to the change in the direction of magnetization is expressed by $\Delta R$. At this time, in case that the direction of perpendicular magnetization of the magneto-optic layer is downward as shown in FIG. 1, the reflection coefficient RF, which is affected by the circular dichroism effect, is given by a following expression (1).

$$RF = R + (\Delta R/2) \quad (1)$$

On the other hand, in case that the direction of perpendicular magnetization of the magneto-optic layer is upward, the reflection coefficient RF, which is affected by the circular dichroism effect, is given by a following expression (2).

$$RF = R - (\Delta R/2) \quad (2)$$

In the present embodiment, either one of upward or downward direction of magnetization, is utilized as the direction of perpendicular magnetization.

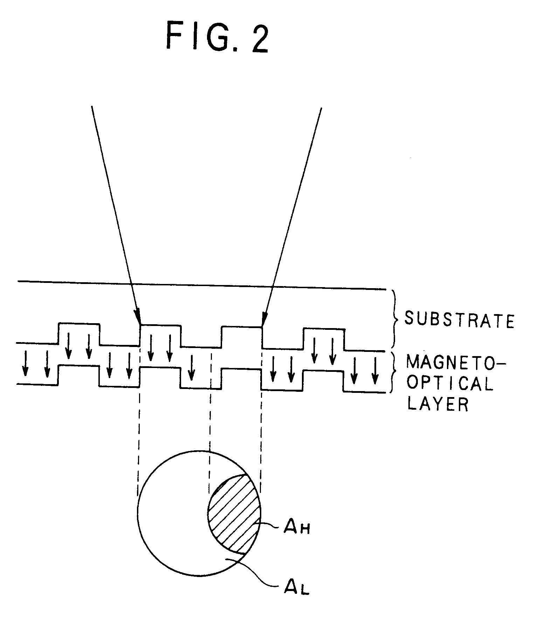

For example, in case of using the downward direction of magnetization as the direction of perpendicular magnetization, as shown in FIG. 2, the output power of the laser beam as a reading light is set such that a tip portion in the disc advancing direction of the laser beam spot may have a temperature not less than the curie point temperature.

By doing this, at the high temperature domain $A_H$ (as indicated by slash lines in FIG. 2), where the temperature of the magneto-optic layer becomes not lower than the curie point temperature, the magnetic domain disappears and it becomes a non-magnetized domain. Therefore, as mentioned above, the reflection coefficient $RF_H$ is given by a following expression (3).

$$RF_H = R \quad (3)$$

At this time, the amount of change in the reflection coefficient due to the pit existence, is represented by $\Delta P$ (>0). The reflection coefficient $RF_{Hp}$ when a pit exists in the high temperature domain $A_H$, is given by a following expression (4).

$$RF_{HP} = R - \Delta P \quad (4)$$

On the other hand, in the low temperature domain $A_L$, which temperature of the magneto-optic layer is lower than the curie point temperature, the direction of magnetization is still downward. Therefore, the reflection coefficient $RF_L$ is given by a following expression (5).

$$RF_L = R - (\Delta R/2) \quad (5)$$

Moreover, the reflection coefficient $RF_{LP}$ when a pit exists in the low temperature domain $A_L$, is given by a following expression (6).

$$RF_{LP} = R - (\Delta R/2) - \Delta P \quad (6)$$

Therefore, by adjusting the thicknesses and the compositions of the dielectric layer and the magneto-optic layer, such that the relationships between the reflection coefficients $RF_H$, $RF_{HP}$, $RF_L$ and $RF_{LP}$, fulfil a following expression (7),

$$RF_H > RF_{HP} > RF_L > RF_{LP} \quad (7)$$

and, by setting threshold values $R_{TH1}$ and $R_{TH2}$ for the signal separation corresponding to the reflection coefficients to fulfil a following expression (8),

$$RF_H > R_{TH1} > RF_{HP} > R_{TH2} > RF_L > RF_{LP} \quad (8)$$

and further by constructing a processing system to mask the light corresponding to the reflection coefficient not higher than the threshold value $R_{TH2}$, it becomes possible to read out the information of only the high temperature domain $A_H$. Further, by distinguishing the existence of the pit with respect to the high temperature domain $A_H$ by use of the threshold value $R_{TH1}$ after that, it becomes possible to reproduce the record information in the high temperature domain $A_H$.

In the same manner, by setting threshold values $R_{TH2}$ and $R_{TH3}$ for the signal separation corresponding to the reflection coefficients to fulfil a following expression (9),

$$RF_H > RF_{HP} > R_{TH2} > RF_L > R_{TH3} > RF_{LP} \quad (9)$$

and, by constructing a processing system to mask the light corresponding to the reflection coefficient not lower than the threshold value $R_{TH2}$, it becomes possible to read out the information of only the low temperature domain $A_L$. Further, by distinguishing the existence of the pit with respect to the low temperature domain $A_L$ by use of the threshold value $R_{TH3}$ after that, it becomes possible to reproduce the record information of the low temperature domain $A_L$.

In addition, a modulation rate $\underline{m}$ in this case is given by a following expression (10).

$$m = (\Delta R/2) / R \quad (10)$$

It will become a following expression (11) if it is expressed by an oval rate $\underline{e}$ in the circular dichroism effect.

$$m = e / (1 + e^2) \quad (11)$$

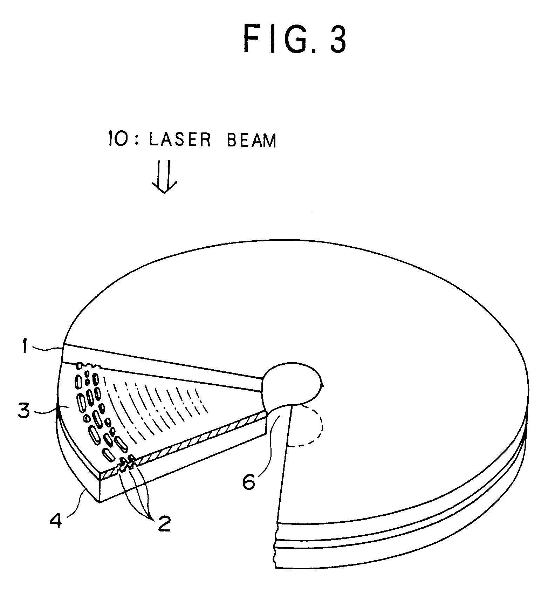

Nextly, concrete embodiments based on the above explained principle of the present invention will be explained with reference to FIG. 3 to FIG. 6.

FIG. 3 shows a whole perspective and partially cross-sectional view of an optical disc as a recording medium. In this case, it is assumed that information is recorded on the optical disc by the same format as a CD (Compact Disk).

The optical disc is provided with: a disc substrate 1 in a disk-like shape, which is formed from a transparent medium such as PMMA resin and which has a center hole 6 at the central portion thereof; an information pit portion 2 at which a plurality of record pits are formed in a concavo-convex form corresponding to digital information recorded on the track of the spiral shape on the disc substrate 1; a reflection coefficient change layer 3, which is layered on the disc substrate 1 formed with the information pit portion 2, and which reflection coefficient changes according to the temperature state depending on the irradiation of a laser beam as a reading light for signal reproduction; and a protection layer 4 for protecting the information pit portion 2 and the reflection coefficient change layer 3.

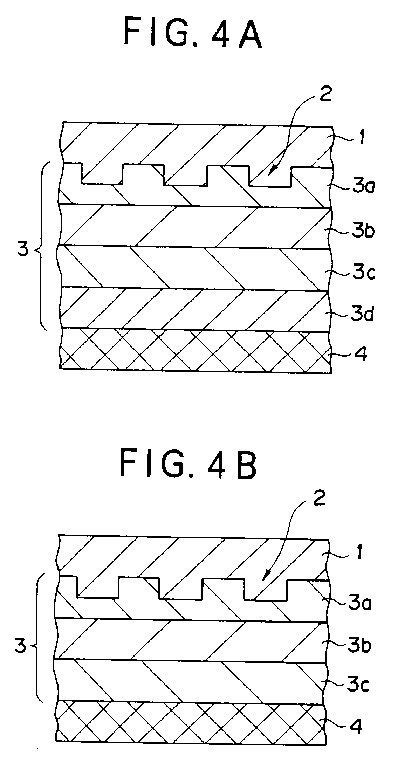

FIG. 4 indicate cross-sectional views of examples of the optical disc of the present embodiment.

As shown in FIG. 4A, the reflection coefficient change layer 3 of the optical disc is provided with: a dielectric layer 3a as a protection film; a magneto-optic layer 3b, which changes the reflection coefficient of the incident circular polarized light by the change in the direction of magnetization thereof; and a dielectric layer 3c as a protection film and a heat insulation film; and a reflection layer 3d for raising the reflection efficiency of the incident light. Moreover, as shown in FIG. 4B, by adjusting the film thickness etc. of the magneto-optic layer 3b and the dielectric layer 3c, it is also possible to constitute the reflection coefficient change layer 3 such that the reflection layer 3d is omitted in the construction of FIG. 4A.

Here, materials for constituting the dielectric layers 3a and 3c, the magneto-optic layer 3b, and the reflection layer 3d, are explained.

The dielectric layers 3a and 3c are constituted of material such as $Si_3N_4$, ZnS, AlN, and SiCN.

As the material of the magneto-optic layer 3b, rare earth - transition metal amorphous alloys such as TbFeCo, GdTbFe, etc., a Pt/Co multilayer film, a Pd/Co multilayer film, and the curie point material such as PtMnSb alloy etc., are used.

As the material of the reflection layer 3d, Al alloy, Au, Ag, Cu, etc. are used.

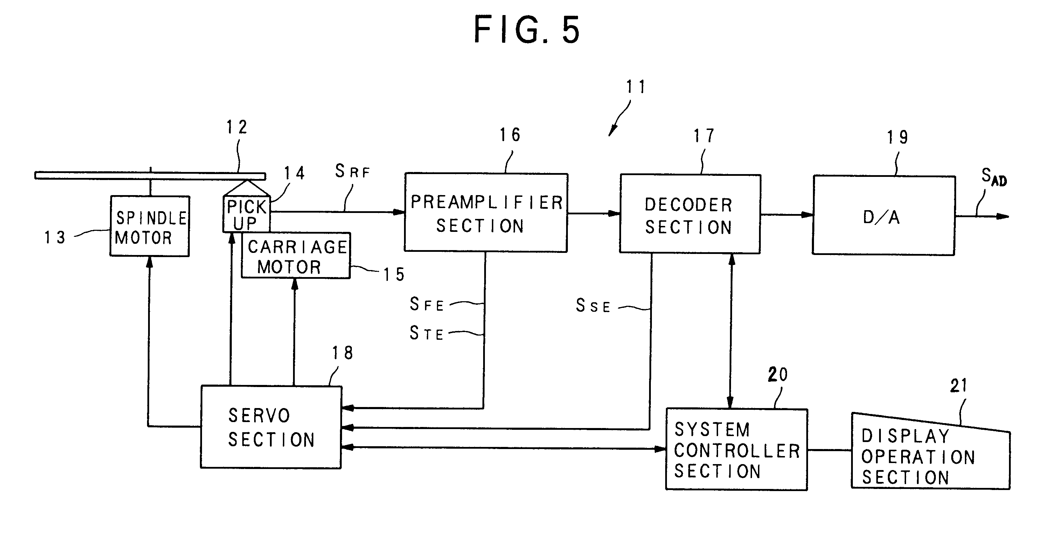

Nextly, the disc reproducing apparatus is explained with reference to FIG. 5.

A disc reproducing apparatus 11 is provided with: a spindle motor 13 for rotationally driving an optical disc 12: a pickup 14 for reading the record information of the optical disc 12, and converting it into a RF (Radio Frequency) signal $S_{RF}$ to output the signal; a carriage motor 15 for driving the pickup 14 in the direction of a track; a preamplifier section 16 for amplifying the RF signal $S_{RF}$, and generating and outputting a focusing error signal $S_{FE}$ and a tracking error signal $S_{TE}$; a decoder section 17 for separating the signal, which is originated from the read-out domain, out of the inputted RF signal by use of the threshold value on the basis of the signal level thereof according to the aforementioned principle of the present invention, converting the separated RF signal $S_{RF}$ into a 2 value signal, further separating a frame synchronous pattern, and performing the EFM (Eight to Fourteen Modulation) demodulation to output the signal, while generating and outputting a spindle motor error signal $S_{SE}$; a servo control section 18, including a spindle servo circuit, a focusing servo circuit and a carriage servo circuit, for controlling the number of rotations of the spindle motor 13 by the spindle servo circuit according to the radial position of the optical disc 2 which the pickup 14 is presently reading, driving an object lens and holding a reading position in a predetermined track position by the focusing servo circuit, driving the carriage motor 15 through the carriage servo circuit to move and hold the whole pickup 14 to a predetermined position; a D/A (Digital to Analog) converter section 19 for converting the data sent from the decoder section 17, into analog audio signal $S_{AD}$ to output the signal $S_{AD}$; a system controller section 20 including a memory to store various data, for controlling the optical disc reproducing apparatus 11 on the whole; and a display operation section 21 for performing various displays of the operation state, the reproducing order etc. of the optical disc reproducing apparatus 11 and performing an input of various data.

Nextly, the operation of the above mentioned reproducing apparatus will be explained.

The optical disc reproducing apparatus 11 rotationally drives the optical disc 12 by the spindle motor 13. The pickup 14 is driven in the direction of the track by the carriage motor 15, reads the record information of the optical disc 12, converts the read signal into the RF (Radio Frequency) signal $S_{RF}$, and outputs the signal $S_{RF}$ to the preamplifier section 16. The preamplifier section 16 amplifies the RF signal $S_{RF}$, and outputs the amplified signal to the decoder section 17. At the same time, the preamplifier section 16 generates and outputs the focusing error signal $S_{FE}$ and the tracking error signal $S_{TE}$ to the servo control section 18. The decoder section 17 separates the signal, which is originated from the read-out domain, out of the inputted RF signal, by use of the threshold value corresponding to the signal level thereof on the basis of the above mentioned principle. The decoder section 17 converts the separated RF signal $S_{RF}$ into the 2 value signal. Further, the decoder section 17 separates the frame synchronous pattern, and performs the EFM (Eight to Fourteen Modulation) demodulation, to output the demodulated signal to the D/A converter section 19.

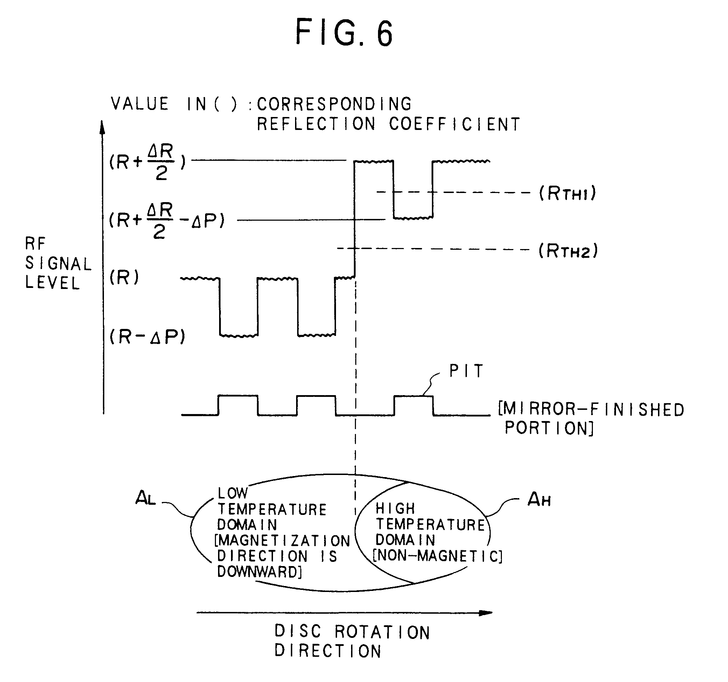

Here, the separation of the RF signal in the decoder section 17 is explained with reference to FIG. 6.

As shown in FIG. 6, the inside area of the laser beam spot, can be divided into the high temperature domain (i.e. the domain which temperature is not lower than curie point temperature) $A_H$, and the low temperature domain (i.e. the domain which temperature is lower than the curie point temperature) $A_L$.

Here, the magnetic domain disappears at the portion of the reflection coefficient change layer 3 corresponding to the high temperature domain $A_H$.

As a result, the reflection coefficient of the reflected light of the high temperature domain $A_H$, becomes R + $(\Delta R/2)$ at the position where no pit exists, while the reflection coefficient becomes R + $(\Delta R/2)$ - $\Delta P$ at the position where the pit exists.

On the other hand, the reflection coefficient of the reflected light of the low temperature domain $A_L$, becomes R at the position where no pit exists, while the reflection coefficient becomes R - $\Delta P$ at the position where the pit exists.

Apart from that, the difference in the above mentioned reflection coefficients becomes the difference in the level of light amount on the photodetector in the pickup, while, at the stage of the RF signal $S_{RF}$ which is the output therefrom, the difference is equivalent to the difference in the signal levels.

Therefore, the decoder section 17 cuts off, from the inputted RF signal $S_{RF}$, the signal component below the level corresponding to a reflection coefficient $R_{TH2}$, which is set according to the aforementioned expression (8).

As a result, the remained signal component of the RF signal $S_{RF}$, becomes the signal component from the high temperature domain $A_H$.

Furthermore, by separating the signal component below the level corresponding to a reflection coefficient $R_{TH1}$, which is set according to the aforementioned expression (8), from the remained RF signal $S_{RF}$, the signal at the position where the pit exists, can be obtained.

While the decoder section 17 separates the above mentioned RF signal, it generates and outputs the spindle motor error signal $S_{SE}$ to the servo control section 18. The servo control section 18 includes a PLL (Phase Lock Loop) circuit, and controls the number of rotations of the spindle motor 13 by use of the PLL circuit so that the linear velocity may become constant according to the radial position of the optical disc 12, which the present pickup 14 is presently reading by the spindle servo circuit. Moreover, the servo control section 18 controls the focal position of the object lens by the focusing servo circuit, and drives the object lens by the tracking servo circuit to hold the reading position in a predetermined track position. Furthermore, the servo section 18 drives the carriage motor 15 by the carriage servo circuit to move and hold the whole body of the pickup 14 to a predetermined position. The D/A converter section 19 converts the data sent from the decoder section 7, into the analog audio signal $S_{AD}$, and outputs the converted signal.

As explained above in detail, the analog audio signal outputted from the D/A converter section 19, becomes the signal corresponding to the record information in the high temperature domain $A_H$ of the reading light beam spot.

In the above mentioned embodiment, the reproduction is performed by use of the difference between the reflection coefficient of the high temperature domain $A_H$ (i.e. the reflection coefficient R of the non-magnetized domain), and the reflection coefficient of the low temperature domain $A_L$ (i.e. the reflection coefficient R + $\Delta$R/2 or R - $\Delta$R/2 of the perpendicular magnetization domain). However, by setting the difference in the reflection coefficient between the high temperature domain and the low temperature domain to be large, namely, by determining the material of the medium, the film thickness, the layer structure, the construction of the apparatus etc., so that the high temperature domain may become the perpendicular magnetization domain having the reflection coefficient R + $\Delta$R/2 (or R - $\Delta$R/2), and the low temperature domain may become the perpendicular magnetization domain having the reflection coefficient R - $\Delta$R/2 or (R + $\Delta$R/2), the C/N (Carrier to Noise ratio) can be further improved.

The case where the information from the high temperature domain is reproduced, has been explained in the above explanation. However, if the signal level of the threshold value is changed by means of the same technique, i.e. if the threshold values $R_{TH2}$ and $R_{TH3}$ are set according to the aforementioned expression (9), it is also possible to reproduce the information from the low temperature domain.

Moreover, in the above explanation, the reproducing apparatus of the optical disc on which the audio signal is recorded, has been explained. However, it is also possible to apply the present invention to other recording medium reproducing apparatuses, such as an external memory apparatus for a computer.

According to the present invention, the separation device separates one of the first received light signal corresponding to the reflected light from the high temperature domain, which temperature is not lower than the curie point, in the reading light spot, and the second received light signal corresponding to the reflected light from the low temperature domain, which temperature is lower than the curie point, in the reading light spot, on the basis of the signal level thereof, from the inputted received light signal, and outputs the separated signal to the reproducing device. The reproducing device reproduces the record information on the basis of the separated one of the first received light signal and the second received light signal. Accordingly, either one of the record information in the high temperature domain and the record information in the low temperature domain in the reading light spot, can be reproduced. Therefore, the information, which has a high spatial frequency with respect to the diameter of the reading light spot, can be reproduced.

The invention may be embodied in other specific forms without departing from the spirit or essential characteristics thereof. The present embodiments are therefore to be considered in all respects as illustrative and not restrictive, the scope of the invention being indicated by the appended claims rather than by the foregoing description and all changes which come within the meaning and range of equivalency of the claims are therefore intended to be embraced therein.

## Claims

1. An apparatus (11) for reproducing an optical recording medium (12), which comprises a substrate and a magneto-optic layer formed on the substrate and on which information is recorded as a phase pit, characterized in that said apparatus comprises:

   a light source (14) for irradiating a circular polarized light as a reading light onto said optical recording medium from a side of the substrate to form a light spot on said optical recording medium;

   a light receiving means (14) for receiving the reading light reflected by said optical recording medium to output a received light signal;

   a separating means (17) for separating one of a first received light signal corresponding to a light reflected from a high temperature domain, which temperature is not lower than the curie point, in the light spot, and a second received light signal corresponding to a light reflected from a low temperature domain, which temperature is lower than the curie point, in the light spot, from the received light signal on the basis of a signal level of the received light signal; and

   a reproducing means (17, 19) for reproducing a record information on the basis of the separated one of the first and second received light signals.

2. An apparatus (11) according to claim 1, characterized in that:

   the optical recording medium (12) comprises an optical disc which phase pit is rotated in a disc advancing direction; and

   said light source (14) irradiates the circular polarized light with such an output power that a tip portion in the disc advancing direction of the light spot has a temperature not lower than the curie point.

3. An apparatus (11) according to claim 1 or 2, characterized in that:

the magneto-optic layer has such a thickness and a composition that the relationships between reflection coefficients $RF_H$, $RF_{HP}$, $RF_L$ and $RF_{LP}$, fulfil a following expression,

$$RF_H> RF_{HP}>RF_L>RF_{LP}$$

$RF_H$: a reflection coefficient in the high temperature domain where no phase pit exits,

$RF_{HP}$: a reflection coefficient in the high temperature domain where the phase pit exits,

$RF_L$: a reflection coefficient in the low temperature domain where no phase pit exits,

$RF_{LP}$: a reflection coefficient in the high temperature domain where the phase pit exits; and that

said separating means (17) separates the first received light signal with threshold values $R_{TH1}$ and $R_{TH2}$ which fulfil a following expression to reproduce the record information in the high temperature domain.

$$RF_H>R_{TH1}>RF_{HP}>R_{TH2}>RF_L>RF_{LP}$$

4. An apparatus (11) according to claim 1 or 2, characterized in that:

the magneto-optic layer has such a thickness and a composition that the relationships between reflection coefficients $RF_H$, $RF_{HP}$, $RF_L$ and $RF_{LP}$, fulfil a following expression,

$$RF_H>RF_{HP}>RF_L>RF_{LP}$$

$RF_H$: a reflection coefficient in the high temperature domain where no phase pit exits,

$RF_{HP}$: a reflection coefficient in the high temperature domain where the phase pit exits,

$RF_L$: a reflection coefficient in the low temperature domain where no phase pit exits,

$RF_{LP}$: a reflection coefficient in the high temperature domain where the phase pit exits; and that

said separating means (17) separates the second received light signal with threshold values $R_{TH2}$ and $R_{TH3}$ which fulfil a following expression to reproduce the record information in the low temperature domain.

$$RF_H>RF_{HP}>R_{TH2}>RF_L>R_{TH3}>RF_{LP}$$

5. A method of reproducing an optical recording medium (12), characterized in that said method comprises the steps of:

preparing an optical recording medium, which comprises a substrate and a magneto-optic layer formed on the substrate and on which information is recorded as a phase pit;

irradiating a circular polarized light as a reading light onto said optical recording medium from a side of the substrate to form a light spot on said optical recording medium;

receiving the reading light reflected by said optical recording medium to output a received light signal;

separating one of a first received light signal corresponding to a light reflected from a high temperature domain, which temperature is not lower than the curie point, in the light spot, and a second received light signal corresponding to a light reflected from a low temperature domain, which temperature is lower than the curie point, in the light spot, from the received light signal on the basis of a signal level of the received light signal; and

reproducing a record information on the basis of the separated one of the first and second received light signals.

6. A method according to claim 5, characterized in that:

in the preparing step, the optical recording medium (12) comprises an optical disc which phase pit is rotated in a disc advancing direction; and

in the irradiating step, the circular polarized light is irradiated with such an output power that a tip portion in the disc advancing direction of the light spot has a temperature not lower than the curie point.

7. A method according to claim 5 or 6, characterized in that:

in the preparing step, the magneto-optic layer has such a thickness and a composition that the relationships between reflection coefficients $RF_H$, $RF_{HP}$, $RF_L$ and $RF_{LP}$, fulfil a following expression,

$$RF_H>RF_{HP}>RF_L>RF_{LP}$$

$RF_H$: a reflection coefficient in the high temperature domain where no phase pit exits,

$RF_{HP}$: a reflection coefficient in the high temperature domain where the phase pit exits,

$RF_L$: a reflection coefficient in the low temperature domain where no phase pit exits,

$RF_{LP}$: a reflection coefficient in the high temperature domain where the phase pit exits; and that

in the separating step, the first received light signal is separated with threshold values $R_{TH1}$ and $R_{TH2}$ which fulfil a following expression to reproduce the record information in the high temperature domain.

$$RF_H>R_{TH1}>RF_{HP}>R_{TH2}>RF_L>RF_{LP}$$

8. A method according to claim 5 or 6, characterized in that:

in the preparing step, the magneto-optic layer has such a thickness and a composition that the relationships between reflection coefficients $RF_H$, $RF_{HP}$, $RF_L$ and $RF_{LP}$, fulfil a following expression,

$$RF_H > RF_{HP} > RF_L > RF_{LP}$$

$RF_H$: a reflection coefficient in the high temperature domain where no phase pit exits,

$RF_{HP}$: a reflection coefficient in the high temperature domain where the phase pit exits,

$RF_L$: a reflection coefficient in the low temperature domain where no phase pit exits,

$RF_{LP}$: a reflection coefficient in the high temperature domain where the phase pit exits; and that

in the preparing step, the second received light signal is separated with threshold values $R_{TH2}$ and $R_{TH3}$ which fulfil a following expression to reproduce the record information in the low temperature domain.

$$RF_H > RF_{HP} > R_{TH2} > RF_L > R_{TH3} > RF_{LP}$$

9. A method according to any one of claims 5 to 8, characterized in that,

in the preparing step, the optical recording medium (12) further comprises at least one of a dielectric layer as a protection layer and a heat insulation layer; and a reflection layer for raising a reflection efficiency.

10. A method according to any one of claims 5 to 9, characterized in that,

in the preparing step, the magneto-optic layer comprises at least one of a film made from rare earth - transition metal amorphous alloy, a Pt/Co multilayer film, a Pd/Co multilayer film, and a film made of the curie point material.

# FIG. 1

$$R + \frac{\Delta R}{2}$$

$$R - \frac{\Delta R}{2}$$

$$R$$

| | | NON-MAGNETIC |
|---|---|---|
| ⇓ | ⇑ | |

⇑,⇓ : DIRECTION OF MAGNETIZATION

↻ : RIGHT-HAND ROTATED CIRCULAR POLARIZED LIGHT

# FIG. 2

SUBSTRATE

MAGNETO-
OPTICAL
LAYER

$A_H$

$A_L$

# FIG. 3

10 : LASER BEAM

⇓

# FIG. 4 A

# FIG. 4 B

# FIG. 5

EP 0 622 793 A2

# FIG. 6

VALUE IN ( ):CORRESPONDING
REFLECTION COEFFICIENT

$(R+\dfrac{\Delta R}{2})$

$(R_{TH1})$

$(R+\dfrac{\Delta R}{2}-\Delta P)$

$(R_{TH2})$

RF SIGNAL LEVEL

$(R)$

$(R-\Delta P)$

PIT

[MIRROR-FINISHED PORTION]

$A_L$

LOW TEMPERATURE DOMAIN [MAGNETIZATION DIRECTION IS DOWNWARD]

HIGH TEMPERATURE DOMAIN [NON-MAGNETIC]

$A_H$

DISC ROTATION DIRECTION

FIG. 7A

LASER BEAM
60
51
52
54
55

FIG. 7B

"BRIGHT"
61
60

"DARK"
61
60
70

FIG. 7C

61
61
61
60
70a
71
70b
52